# EUROPEAN PATENT SPECIFICATION

(11) **EP 0 948 432 B1**
(45) Date of publication and mention of the grant of the patent: **18.07.2001**
(21) Application number: 97951054.2
(22) Date of filing: 19.12.1997
(51) Int. Cl.: B32B 27/32, B65D 65/40

(54) **FILMS HAVING IMPROVED SEALING PROPERTIES**
FOLIEN MIT VERBESSERTEN SIEGELEIGENSCHAFTEN
FILMS AYANT DE MEILLEURES PROPRIETES DE (THERMO)SCELLAGE

(30) Priority: 26.12.1996 US 34178 P
(43) Date of publication of application: 13.10.1999
(73) Proprietor: DUPONT CANADA INC., Mississauga, Ontario L5M 2H3 (CA)
(72) Inventor: BRECK, Alan, Keith, Kingston, Ontario K7M 6G7 (CA); CLIMENHAGE, David, Charles, Orono, Ontario L0B 1M0 (CA)
(74) Representative: Jones, Alan John
(86) International application number: CA9701015
(87) International publication number: WO9829249

(56) References cited:
- EP-A- 0 580 377
- EP-A- 0 756 931
- WO-A-93/02859
- WO-A-95/21743
- WO-A-95/26269
- US-A- 5 206 075
- US-A- 5 360 648

## Description

### FIELD OF THE INVENTION

Sealing properties of films are key to their effective use in many packaging applications, such as for example fluid containing disposable pouches that may be manufactured on form and fill equipment employing either impulse or thermic sealing techniques; vacuum packages for irregular shaped products and for prepared meats, cheeses and the like; shrink wrapped poultry and skin packaging. While this invention is directed to all forms of packaging, it is of particular value in the area of liquid packaging, namely for the manufacture of liquid containing pouches.

Packaging machinery is being designed to operate at faster speeds all the time. Such machinery requires lower sealing temperatures and improved hot tack strength in films to be used to make packaging with such machines.

### BACKGROUND OF THE INVENTION

Many efforts have been made to improve the sealing properties of films used in the packaging area, particularly with respect to films used to package flowable materials. While the advent of single-site catalyst polymers or metallocene polymers has provided films of improved hot tack strength, there remains an ongoing need to improve further the seals of such packages. This is especially true for fluid containing pouches, e.g. milk pouches.

Hot tack strength is the ability of a film to seal under stress while still in a molten state. This property is one of the most critical in packaging applications where machines run at high speeds and sealing takes place between molten sealing components of a package, thereby placing the sealing components, and hence the seal under stress when the package is formed, filled and sealed.

It should be noted that in the case of fluid containing pouches made on form, fill and seal equipment, there appears to be a correlation between seal leaker frequency and hot tack strength. This is supported by data gathered in the dairy industry.

The development of single-site catalyst (SSC) or metallocene technology has brought about an improved class of polymers ranging from crystalline to elastomeric materials. These polymers have features such as improved impact strength and toughness, better melt characteristics, because of the control over molecular structure, and better clarity. Exxon and Dow have developed ethylene interpolymers made with SSC or metallocene catalysts and each has the benefit of a number of patents relating to these polymers. Exxon is said to use mono- and bis-cyclopentadienyl metallocenes, while Dow's focus is on titanium cyclopentadienyl metallocenes, which it calls "constrained geometry catalysts".

In practice, Exxon produces ethylene-butene and ethylene-hexene interpolymers, while Dow makes ethylene-octene interpolymers of the metallocene or SSC type. Dow claims that its metallocene or SSC polymers are different as they have a low level of long chain branching that improves processability in otherwise linear polymers.

### BACKGROUND ART

Examples of the polymers of Exxon are found in the following patents and applications, the disclosures of which are incorporated herein by reference, U.S. Patent No. 5,382,630 issued January 17, 1995 to Stehling et al and WO93/03093 published February 18, 1993 to Meka et al.

Examples of the polymers of Dow are found in the following patents, the disclosures of which are incorporated herein by reference: U.S. Patents Nos. 5,508,051 issued April 16, 1996 to Falla et al; 5,360,648 issued November 1, 1994 to Falla et al; 5,278,272 issued January 11, 1994 to Lai et al; and 5,272,236 issued December 21, 1993 to Lai et al.

In DUPONT CANADA INC.'s PCT International Publication WO 95/10566 published April 20, 1995, the disclosure of which is incorporated herein by reference, there are disclosed pouches for flowable materials wherein the sealant film is made from a SSC copolymer of ethylene and at least one C₄-C₁₀ α-olefin. Blends of these SSC copolymers with at least one polymer selected from multi site catalyst linear copolymers of ethylene and at least one C₄-C₁₀ α-olefin, a high pressure polyethylene and blends thereof.

In DUPONT CANADA INC.'s PCT International Publication WO 95/21743 published August 17, 1995, the disclosure of which is incorporated herein by reference, there is disclosed an ethylene copolymer film of improved stiffness for use in the manufacture of fluid containing pouches. Typically, the structure comprises an interposed layer of polyethylene having a thickness in the range of 5 to 20 microns and a density of at least 0.93 gm/cc and a melt index of from about 1 to 10 dg/minute, and at least one outer layer being a SSC or metallocene polyethylene/α-olefin film which may have a density in the range of 0.88 to 0.93 gm/cc. The only requirements placed on the stiffening interposed layer are that it be of a particular thickness and density. These are greater in the stiffening layer than in the metallocene or SSC layer(s). This application indicates that the stiffening layer is included in order for the fluid containing pouch to stand up properly so that fluid may be poured from it when the pouch is placed in a supporting container.

DUPONT CANADA INC.'s U.S. Patents Nos. 4,503,102(Mollison) and 4,521,437(Storms), the disclosures of which are incorporated by reference disclose a polyethylene film for use in the manufacture in a form, fill and seal process of a disposable pouch for liquids such as milk. U.S. Patent No. 4,503,102 discloses pouches made from a blend of a linear copolymer of ethylene and a C₄-C₁₀ α-olefin and an ethylene-vinyl acetate polymer copolymerized from ethylene and vinyl acetate. The linear polyethylene copolymer has a density of from 0.916 to 0.930 g/cm³ and a melt index of from 0.3 to 2.0 g/10 minutes. The ethylene-vinyl acetate polymer has a weight ratio of ethylene to vinyl acetate from 2.2:1 to 24:1 and a melt index of from 0.2 to 10 g/10 minutes. The blend disclosed in Mollison U.S. Patent No. 4,503,102 has a weight ratio of linear low density polyethylene to ethylene-vinyl acetate polymer of from 1.2:1 to 24:1. U.S. Patent No. 4,503,102 also discloses multi-layer films having as a sealant film the aforementioned blend.

U.S. Patent No. 4,521,437 (Storms) describes pouches made from a sealant film which is from 50 to 100 parts of a linear copolymer of ethylene and octene-1 having a density of from 0.916 to 0.930 g/cm³ and a melt index of 0.3 to 2.0 g/10 minutes and from 0 to 50 parts by weight of at least one polymer selected from the group consisting of a linear copolymer of ethylene and a C₄-C₁₀-α-olefin having a density of from 0.916 to 0.930 g/cm³ and a melt index of from 0.3 to 2.0 g/10 minutes, a high-pressure polyethylene having a density of from 0.916 to 0.924 g/cm³ and a melt index of from 1 to 10 g/10 minutes and blends thereof. The sealant film disclosed in U.S. Patent No. 4,521,437 is selected on the basis of providing (a) pouches with an M-test value substantially smaller, at the same film thickness, than that obtained for pouches made with film of a blend of 85 parts of a linear ethylene/butene-1 copolymer having a density of about 0.919 g/cm³ and a melt index of about 0.75 g/10 minutes and 15 parts of a high pressure polyethylene having a density of about 0.918 g/cm³ and a melt index of 8.5 g/10 minutes, or (b) an M(2)-test value of less than about 12%, for pouches having a volume of from greater than 1.3 to 5 litres, or (c) an M(1.3)-test value of less than about 5% for pouches having a volume of from 0.1 to 1.3 litres. The M, M(2) and M(1.3)-tests are defined pouch drop tests for U.S. Patent No. 4,521,437. The pouches may also be made from composite films in which the sealant film forms at least the inner layer.

In Falla et al WO 93/02859 published February 18, 1993, the disclosure of which is incorporated herein by reference, there is described the use of a linear ethylene copolymer in the manufacture of films used to make fluid containing pouches. These copolymers are characterised as ultra low density linear polyethylene ("ULDPE") sold commercially as ATTANE™ by Dow and described as a linear copolymer of ethylene with at least one α-olefin having from 3 to 10 carbon atoms, for example, the ULDPE may be selected from ethylene-1-propylene, ethylene-1-butene, ethylene-1-pentene, ethylene-4-methyl-1-pentene, ethylene-1-hexene, ethylene-1-heptene, ethylene-1-octene and ethylene-1-decene copolymers, preferably ethylene-1-octene copolymer.

In Meka et al WO 93/03093 published February 18, 1993, the disclosure of which is incorporated herein by reference, there are described metallocene polymers useful for making sealed articles, comprising ethylene interpolymers having a CDBI of at least 50% and a narrow molecular weight distribution or a polymer blend comprising a plurality of said ethylene interpolymers as blend components.

### SUMMARY OF THE INVENTION

This invention provides a film structure and a method of making it, as well as packages formed therefrom, wherein the sealing properties of a surface sealing layer are substantially increased as compared with a monolayer film of such a polymer. By "sealing properties" is meant a substantially increased hot tack strength which is observable in such structures and which therefore allows the production of films and packaging products of greatly increased performance characteristics.

The film structure proposed herein has been found to possess a substantially increased hot tack strength as compared with a monolayer SSC film. This increase is very unexpected since it is at least double the values measured for the monolayer film itself across the whole range of temperatures as well as for the peak values. This is of great significance given the importance of this property in sealing. It is also quite unexpected since it is not observable in non-metallocene or non-SSC polymer film structures. For example, SSC polymers took hot tack strength to levels around 600 to 800 gms/3 inches from the 400 gm/3 inches level, but we have measured strengths of about 1200 to 1800 gm/3 inches in the structures of this invention. Clearly there is a synergistic effect in the structure proposed herein.

This invention provides in one aspect, a film having at least two layers for use as a sealant component in a multi-layer film or as a sealant film in a multi-layer structure comprising a surface sealing layer and a hot tack strength boosting layer, the surface sealing layer being selected from single-site catalyst (SSC) interpolymers of ethylene and one or more C₃ - C₂₀ α-olefins having a density in the range of about 0.87 to about 0.930 gm/cc and a melt index of from about 0.2 to about 10 dg/minute; and the hot tack strength boosting layer substantially increasing the hot tack strength of the surface sealing layer and being selected from single-site and non-single-site catalyst copolymers, homopolymers and terpolymers of ethylene and blends thereof, having a density of from at least about 0.900 gm/cc and a melt index of from about 0.2 to about 20 dg/minute; wherein the density difference for the SSC layer to the boosting layer ranges from about 0.003 gm/cc to about 0.35 gm/cc.

More preferably, the density difference ranges from at least about 0.005 to about 0.06 gm/cc; and most preferably from about 0.015 to about 0.03 gm/cc.

In another preferred form, the invention provides a film wherein the SSC interpolymers comprise ethylene and C₄-C₈ α-olefins and blends thereof with other ethylene polymers, and the density ranges from about 0.88 gm/cc to about 0.920 gm/cc and the melt index is from 0.5 to 2.0 dg/minute; and the boosting layer is selected from single-site catalyst and non-single-site catalyst copolymers, homopolymers and terpolymers of ethylene and blends thereof selected from interpolymers of ethylene and one or more C₃-C₂₀ α-olefins; ethylene homopolymers made by high pressure processes; ethylene vinyl acetate polymers; acid copolymers; co-extrudable ethylene copolymer adhesives; and blends of such polymers, and the density ranges from about 0.900 gm/cc to about 0.960 gm/cc and the melt index is from about 0.5 to about 2.0 dg/minute; and the difference in densities between the layers is at least about 0.005 to about 0.06.

The film may be the principal or component in a multi-layer structure, on one or both surfaces thereof.

The film preferably comprises the SSC layer having a film thickness of from about 0.5 mil to about 3.0 mil; the hot tack strength boosting layer has a film thickness of from about 0.5 mil to about 6.0 mil; and the ratio of the film thickness of the SSC layer to the boosting layer ranges from about 0.08 to about 6.

More preferably the SSC layer has a melting point of from about 60°C to about 120°C; and the hot tack strength boosting layer has a melting point of from about 70°C to about 130°C; and the difference in the melting points between the SSC layer and the boosting layer is at least about 10°C, with the melting point of the boosting layer being higher.

The above films may be used to make pouches for containing flowable materials. The pouch is in tubular form and has transversely heat sealed ends.

In yet another aspect, the invention provides a method of enhancing the sealing properties of a single-site catalyst (SSC) resin layer for use as a sealing layer in a packaging film structure wherein the SSC resin layer is adjacent another polymer layer of higher density, and the density difference between the layers is from at least about 0.003 gm/cc to about 0.35 gm/cc. The film structures described above provide the result of this method.

Finally the invention provides a process for making pouches filled with a flowable material, using a vertical form, fill and seal apparatus, in which process each pouch is made from a flat web of film by forming a tubular film therefrom with a longitudinal seal and subsequently flattening the tubular film at a first position and transversely heat sealing said tubular film at the flattened position, filling the tubular film with a predetermined quantity of flowable material above said first position, flattening the tubular film above the predetermined quantity of flowable material at a second position and transversely heat sealing said tubular film at the second position, the improvement comprising making the pouches from a flat web of film comprising a film as described above.

As indicated blends of polymers may be used for the boosting layer because of processability and/or economic requirements. Typically a high pressure polyethylene up to about 25% by weight is added as a processing aid. Above 25% the film properties of the blend start to differ from the main polymer on its own. Other linear low density polyethylene polymers, LLDPE can be blended usually for economic reasons. The blends which may be used herein are any of those which are known in the art and which have been described in any and all of the aforementioned patents and applications. The density of the boosting layer preferably ranges from 0.900 to about 0.960, unless the layer is made from ethylene vinyl alcohol copolymer in which case the range would be from about 1.10 to about 1.20 gm/cc, more preferably from about 1.17 gm/cc to about 1.19 gm/cc.

The single-site catalyst interpolymer may preferably be selected from interpolymers comprising ethylene and at least one C₄ - C₈ α-olefin, in particular butene, hexene, octene, n-methyl-pentane and combinations thereof. Commercially available polymers include the following: EXACT™ and EXCEED™ sold by Exxon and AFFINITY™ and ELITE™sold by Dow. The more preferred density ranges for the SSC interpolymer may be from about 0.88 to about 0.92 gm/cc.

The boosting layer may be selected, as stated previously from single-site catalyst and non-single-site catalyst homopolymers, copolymers and terpolymers of ethylene. Especially preferred are interpolymers of ethylene and one or more C₃ - C₂₀ α-olefins, most preferably C₄ - C₁₀, most preferably C₄ - C₆, in particular, butene, hexene, octene and n-methyl-pentane. Non-single-site catalyst polymers are a preferred group.

Examples of commercially available linear low density polyethylene materials include SCLAIR™ from Novacor and DOWLEX™ from Dow. An example of ultra low density polyethylene material is ATTANE™ from Dow. However, a wide range of ethylene polymers may be used as the boosting layer, with the only criteria being that the layer enhances the hot tack strength of the SSC polymer layer and it meets the intended application requirements. Polymers that fall within this family include both single-site catalyst and non-single-site catalyst ethylene polymers and interpolymers, the latter including, for example, Zeigler-Natta catalyst polymers.

Other examples of these polymers include polyethylene homopolymers made by high pressure processes. Commercial examples include ALATHON™ available from E.I. du Pont de Nemours and ethylene vinyl acetate polymers, examples of which are commercially available from E.I. du Pont de Nemours under the trade-mark ELVAX™.

In another embodiment, the boosting layer may be ethylene - acid copolymers such as SURLYN™ and NUCREL™ available from E.I. du Pont de Nemours or ethylene vinyl alcohol copolymers such as EVAL™ from Kuraray or SOARNOL™ from Nippon Gohsei. These polymers may not bond directly with polyethylene and may be secured by co-extrudable adhesives such as BYNEL™ (available from E. I. du Pont de Nemours). In such instance the co-extrudable adhesives may act as the boosting layer.

It is possible to use the film of this invention as a sealant film or as a component in a more complex multi-layer structure. Typical structures are those known in the art and which will suit the packaging application and still allow the benefits of the enhanced sealing properties of the metallocene or SSC layer to be taken advantage of in the structure.

The previously referenced patents and applications describe the various processes that may be used to manufacture the pouches of this invention. Vertical form, fill and seal apparatus is used to make the pouches envisaged herein. A flat web of film is unwound from a roll and formed into a continuous tube in a tube forming section by sealing the longitudinal edges together by either a lap seal or a fin seal. This tube is pulled vertically towards a filling station and is then collapsed across a transverse cross section of the tube, the position of which section coincides with a sealing device below a filling station. A transverse heat seal is made at the section providing an air and liquid tight seal across the tube.

The material to be packaged enters the tube above the transverse seal, the tube drops a predetermined distance under the influence of gravity on its load. The sealing device is operated again, and a second transverse seal is made together with a cut through the tube and often through the material placed in the pouch. Thus in this operation, the pouch which has an elongate pillow shape is formed, filled and sealed in a rapid sequence of steps. Many variations of this process are possible and are apparent to those skilled in the art. Examples of typical liquid packaging apparatus used for this type of manufacture are made by Hayssen, Thimonnier and Prepac.

The term "flowable materials" as used herein encompasses materials which flow under gravity or which may be pumped. Gaseous materials are not included in this definition. The flowable materials include liquids, for example, milk, water, fruit juice, oil; emulsions, for example, ice cream mix, soft margarine, pastes, for example, meat pastes, peanut butter; preservers, for example, jams, pie fillings, marmalade; jellies; doughs; ground meat, for example, sausage meat; powers, for example, gelatine powders, detergents; granular solids, for example, nuts, sugar; and like materials. The pouch of the present invention is particularly useful for liquid foods, for example, milk.

The resins used to make the film of this invention are preferably coextruded in known ways, although other suitable methods may be used, such as those involving laminates, coatings and the like. All forms of conventional laminating and coating methods may be used to manufacture the present films, including extrusion coating, roll coating, 100% solids lamination, water and solvent based adhesive laminations and the like. When blends are used, these may be made by blending the components prior to or at the time of extrusion just prior to remelting in the extruder. A film extruder may be used and the film made using known techniques. An example of a blown film process is found in Canadian Patent No. 460,963 issued November 8, 1949 to Fuller. Canadian Patent No. 893,216 issued February 15, 1972 to Bunga et al describes a preferred method using an external or internal cooling mandrel in the blown film process.

Additives, known to those skilled in the art, such as anti-block agents, slip additives, UV stabilisers, pigments and processing aids including high pressure polyethylene may be added to the polymers from which the pouches of the present invention are made. Typically these may comprise up to 50% by weight of total resin components, although as previously indicated, when the additional additives and other components reach this proportion, it is important to be sensitive to the desired hot tack strength enhancement for the structure.

As stated previously, the film of this invention may be used in packaging applications where sealing properties, particularly hot tack strength is important. Reference may be had to The Wiley Encyclopaedia of Packaging Technology, 1986, John Wiley & Sons, Inc., under the heading Heat Sealing, the disclosures of which are incorporated herein by reference. Descriptions are found here for all types of heat sealing including bar, band, impulse, wire or knife, ultrasonic, friction, gas, contact, hot melt, pneumatic, dielectric, magnetic, induction, radiant and solvent sealing. Any of these techniques that lend themselves to packaging materials incorporating the film of this invention fall within the scope of this disclosure. Most preferred are packages made by impulse sealing.

### BRIEF DESCRIPTION OF THE DRAWINGS

In the accompanying drawings which are used for purposes of illustrating this invention,

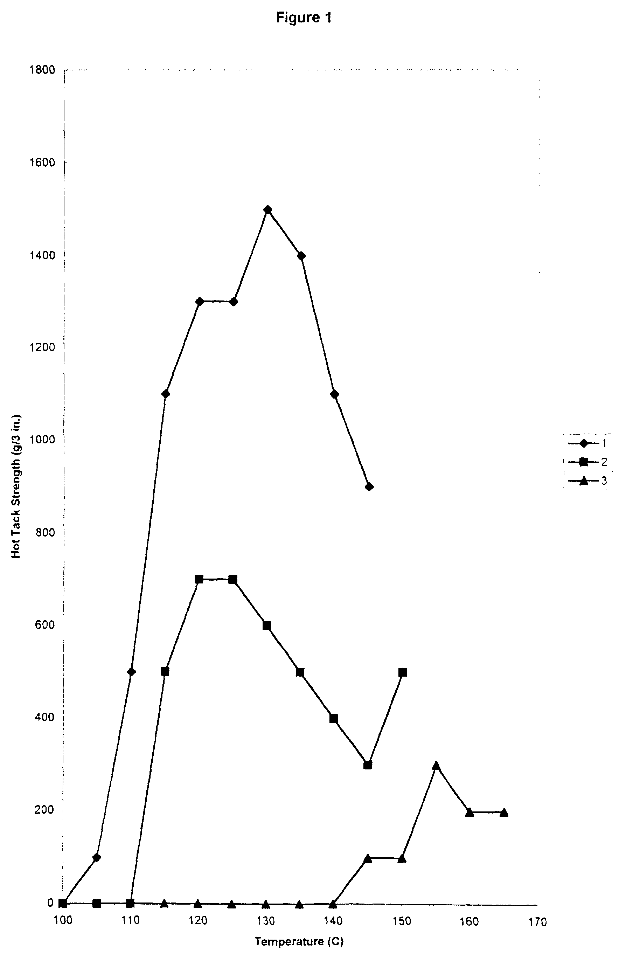

Figures 1 to 9 are graphical plots of the effects of a higher density polyethylene layer adjacent a metallocene layer on hot tack strength.

### Method for Determining Hot Tack Strength

The method described herein is one of many that may be used to measure this property. The values set out subsequently in the examples will be generally equivalent to those obtained using other conventional methods.

### Principle

A film seal is stressed immediately after the sealing operation has been completed to give an indication of the hot strength of the seal. This method may be used for all polyolefin films and laminates. Many automatic filling operations place a stress on the seal area immediately after the filling operation has been completed. Films having superior hot tack strength are desirable in this application.

### Test Method

1. Place the prepared film samples over the rollers and between the jaws of the hot tack gun. Activate the switch on the gun to clamp the film sample securely in the jaws of the gun apparatus.
2. Place a weight on the stress ring of the apparatus. A typical starting weight is 200 g.
3. Set the Sentinel™ heat sealer jaw pressure at 20 psi and the dwell time at 1 second. Set the temperature to control at 125°C (lower for thin films, higher for thick films). The temperature is increased in 5°C increments as the ultimate seal range is found.
4. Using the foot switch, open and close the jaws of the "Sentinel" heat sealer four times to equalize the temperature of the jaws.
5. Place the gun apparatus so that the taped film or equivalent area of a laminated strip, extends between the sealer jaws.
6. Close the jaws of the Sentinel™ heat sealer by depressing the foot switch.
7. Release the jaws of the hot tack gun (by activating the switch on the gun) when the elapsed time indicator reaches 0.5 sec.
8. Remove the sample from the gun apparatus and judge the seal integrity. One millimetre of separation is considered acceptable.
9. If the seal is good, use a new sample and repeat the above procedure with increased weight on the stress ring.
More samples can be prepared while waiting for the heater to settle at the new setting.

### Apparatus

1. DuPont hot tack gun with weights in 100 gram divisions.
2. Sentinal™ heat sealer with pressure gauge and temperature controller. A 1 inch (2.54 cm) Teflon™ coated bar is mounted on the upper jaw. The bottom jaw is stationary with a strip of heatproof fabric 1 ½" (3.81 cm) wide placed over a rubber paid, ½" (1.27 cm) thick by 1" (2.54 cm) wide. A bracket is attached below the bottom jaw to support and align the gun and sample during testing. Only the upper jaw is heated.
3. 3.0" x 9.25" template.
4. 3.5" x 9.0" template.
5. Scotch™ #352 polyester packaging tape.
6. Hand held roller with hard rubber roll.

### Procedure

### A. Unsupported Polyolefin Film

1. Use the 3.5" x 9.0" template to cut samples with the long side parallel to the MD of the film. The film samples should be allowed to condition for 24 hours before running hot tack tests.
2. Place the #352 tape across both ends of the sample, allowing the tape to overlap the film edge by about 1/8".
3. Roll the tape with the roller to ensure an even contact between the tape and the film, eliminating air bubbles.
4. Using the 1.8" tape overlaps, tape the sample in a loop.
5. Using the 3.0" and 9.25" template, trim the excess tape and film off the edges to obtain a loop of film 3.0" x 9.0" with a taped safety seal.

### B. Laminates

The purpose of the polyester tape is to support the polyolefin film and prevent it from sticking to the jaws. Therefore, a lamination with an outer layer of nylon, polyester, cellulose film etc., will not need to be taped, so the following procedure may be used.
1. Use the 3.0" x 9.25" template to cut samples with the long side parallel to the MD of the film. The film samples should be allowed to condition for 24 hours before running hot tack tests.
2. Form the sample strip into a loop and make a 1.8" safety heat seal at the end. Allow seal to cool.

### Calculations

Plot the seal rating against temperature. A curve is usually drawn through the seal points to indicate seal integrity for any given temperature.

It should be noted that density measurements are made in accordance with methods known in the art as set out in ASTM Procedure D1505. The melt index may be determined in accordance with known methods and in particular by ASTM Procedure D1238-94a. The melting point may be determined using Differential Scanning Colorimetry (DSC). An initial melting profile of the polymer is obtained. Heat flow in MW is measured as a function of temperature at which the minimum value of heat flow occurs.

### DETAILED DESCRIPTION OF THE INVENTION

### Example 1

The hot tack strength of two monolayer films was compared to the hot tack strength of a coextruded film made with the same two polymers and the results were plotted in Figure 1 and were made on a blown film process with an internal cooling mandrel at a blow-up ratio of 1.4:1. The thickness of each of the layers in the 76 µm thick coextruded film was approximately 25/25/25 µm. The hot tack strength of the coextrusion exhibited at least 2 times the hot tack strength of the monolayer films at each temperature tested. A 76 µm thick monolayer film made from single-site catalyst ethylene/octene copolymer with a density of 0.902 g/cc and melt index of 1.0 g/10 min. @ 190°C/2.16 kg (Dow Affinity™ PL1880) exhibited a hot tack that peaked at 700 g/3 in. at 120 and 125°C (curve #2). A 19 µm thick monolayer film made from multi site catalyst high density linear polyethylene with a density of 0.957 g/cc and melt index of 1.0 (Sclair™ 19°C) exhibited a hot tack of only 300 g/3 in. at 155°C (curve #3). A coextrusion of the two polymers in which the core layer was 0.957 g/cc density high density polyethylene and the outer layers were 0.902 g/cc density metallocene plastomer exhibited a hot tack with peak values from 1100 to 1500 g/3 in. (curve #1). Another way of expressing this is that addition of a core layer of high density polyethylene, to the metallocene plastomer increased its hot tack strength roughly twofold over its entire hot tack temperature range compared to the same monolayer plastomer film. This was completely unexpected.

### Example 2

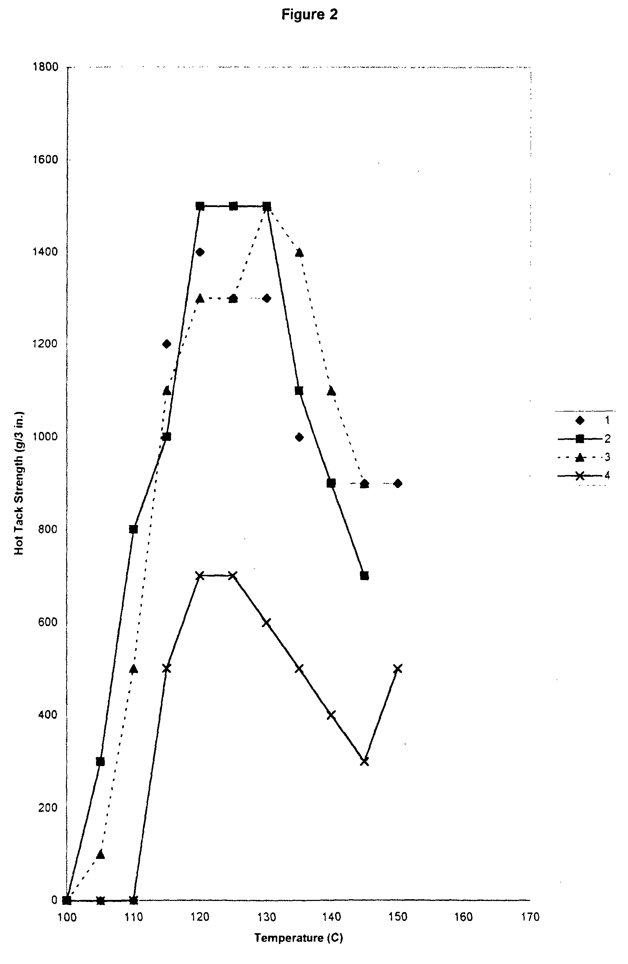

Hot tack strength of three coextrusions made with Affinity™ PL1880 outer layers and core layers of medium to high density polyethylene were compared and results are found in Figure 2. The densities of the core layers were 0.935 (curve #1), 0.945 (curve #2) and 0.957 g/cc (curve #3), respectively. The hot tack strength of the monolayer Affinity™ PL1880 was shown for comparison (curve #4). The films were all 76 µm thick and were made on a blown film process with an internal cooling mandrel at a blow-up ratio of 1.4:1. The thickness of each of the layers in the coextruded films were approximately 25/25/25 µm, respectively. As can be seen, the hot tack strength of the Affinity™ PL1880 has been at least doubled by the addition of a higher density core layer. The three coextrusions were similar in hot tack performance. The core layers in the coextruded films were made from the following resins:
Sclair™ 14K - multi site catalyst ethylene/octene copolymer with a density of 0.935 g/cc and melt index of 5.0;
Sclair™ 16A - multi site catalyst ethylene/butene copolymer with a density of 0.945 g/cc and melt index of 0.28; and
Sclair™ 19C - multi site catalyst high density linear polyethylene with a density of 0.957 g/cc and melt index of 1.0.

### Example 3

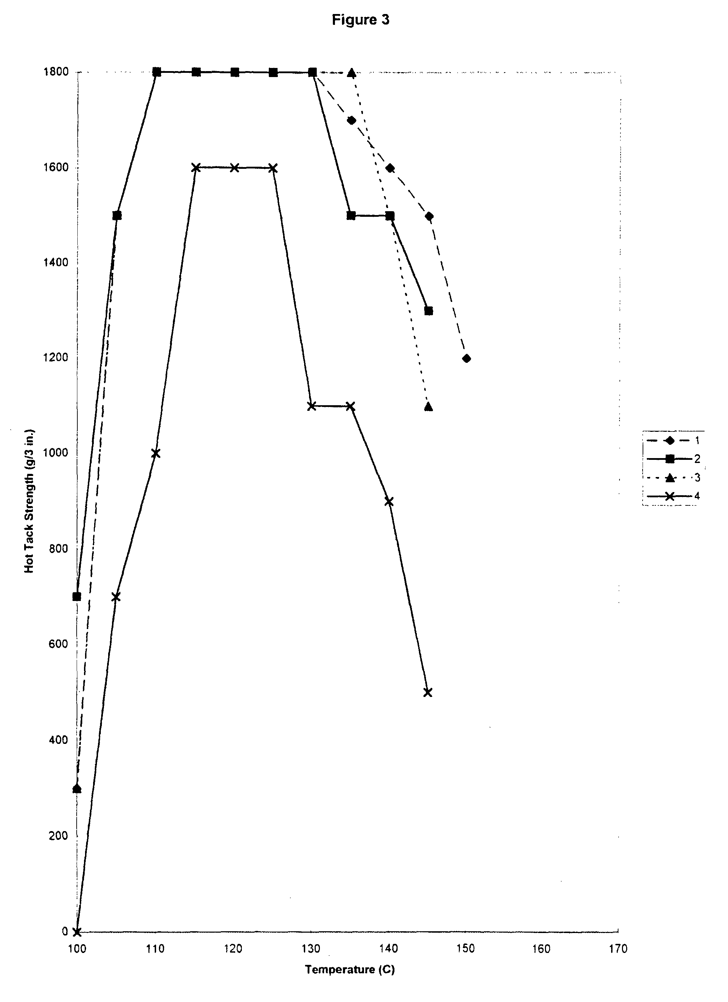

The hot tack strength of three coextrusions (nominally 76 µm thick) made with outer layers of Exact ™ 3132 0.901 g/cc density metallocene plastomer, each with a core layer of polyethylene with a different density: 0.919 g/cc in curve #1, 0.945 g/cc in curve #2 and 0.957 g/cc in curve #3, respectively was tested and plotted in Figure 3. The hot tack strength of 76 µm thick monolayer Exact™ 3132 film was shown for comparison (curve #4). The films were made using a conventional blown film process. The coextrusions were made at a blow-up ratio of 2.2:1, whereas the monofilm was made at a blow-up ratio of 2.8:1. The thickness of each of the layers in the coextruded films was approximately 15/46/15 mm, respectively. The 0.919 g/cc density core layer was composed of a blend of 85% by weight of Sclair™ 11L4B LLDPE resin and 15% by weight of Nova LF0521A™ (low density ethylene homopolymer). The 0.945 and 0.957 g/cc density core layers were composed of 100% Sclair™ 16A and 19C respectively. Hot tack values for the center parts of the curves represent the limit of the test method rather than the value for the film a that particular temperature. Nevertheless, it can be seen that the coextrusions of the invention significantly outperform the monofilm in both the lower temperature and upper temperature portions of the hot tack curves. The hot tack strength of the coextruded films exceeds a given value over a broader range of temperatures than does the monofilm. It is apparent that inclusion of a higher density core from about 0.920 to about 0.960 g/cc in the metallocene plastomer films gives an unexpected doubling of hot tack strength.

Exact™ 3132 - single-site catalyst ethylene/hexene copolymer with a density of 0.901 g/cc and a melt index of 1.2 Sclair™ 11 L4B - multi site catalyst ethylene/octene copolymer with a density of 0.919 g/cc and a melt index of 0.75 Nova LF0521A™ - ethylene homopolymer made by the high pressure process with a density of 0.921 g/cc and a melt index of 5.0 Sclair™ 16A - multi site catalyst ethylene/butene copolymer with a density of 0.945 g/cc and melt index of 0.28 Sclair™ 19C - multi site catalyst high density linear polyethylene with a density of 0.957 g/cc and melt index of 1.0.

### Example 4

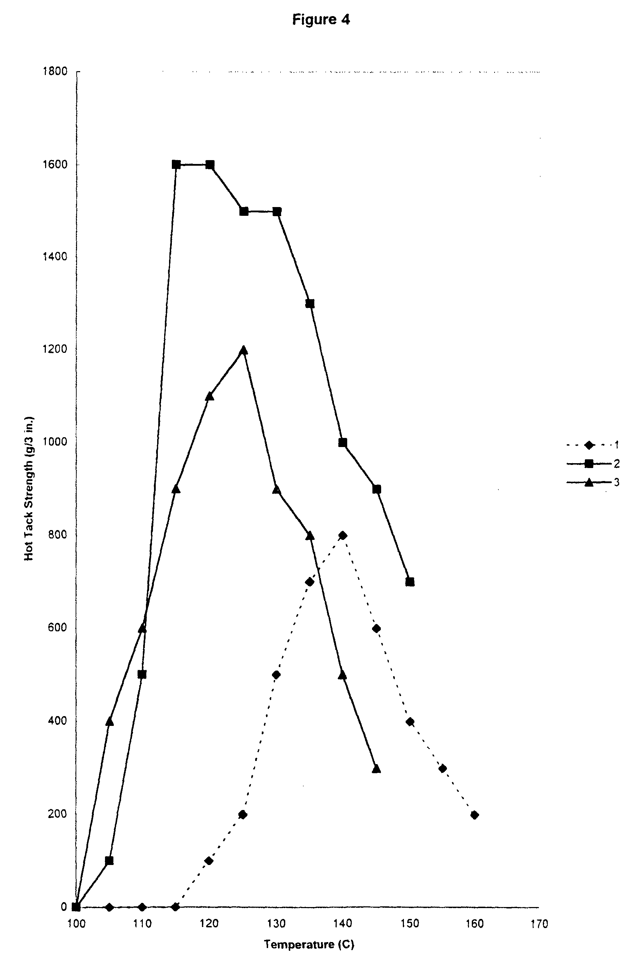

The hot tack strength of two blown film coextrusions, one 76 µm thick (curve #2) and the other 51 µm thick (curve #3), made with outer layers of Affinity ™ PL1880 copolymer resin and a core layer of Sclair ™ D332-05 medium density resin are compared with the hot tack strength of 76 µm Affinity ™ PL1880 monofilm (curve #1) in Figure 4. It can be seen that the unexpected improvement in hot tack is not limited to films which are 76 µm thick. The 51 µm coextruded film of the invention has higher hot tack strength than the 76 µm monofilm except at the highest portion of the sealing temperature range. The thickness of each of the layers in the coextruded films were approximately 13/50/13 µm, respectively for the 76 µm film and 8.5/34/8.5 µm, respectively for the 51 µm film.
Affinity ™ PL1880 - single-site ethylene/octene copolymer with a density of 0.902 g/cc and a melt index of 1.0. Sclair™ D332-05 - multi site ethylene/octene copolymer with a density of 0.930 g/cc and a melt index of 1.0.

### Example 5

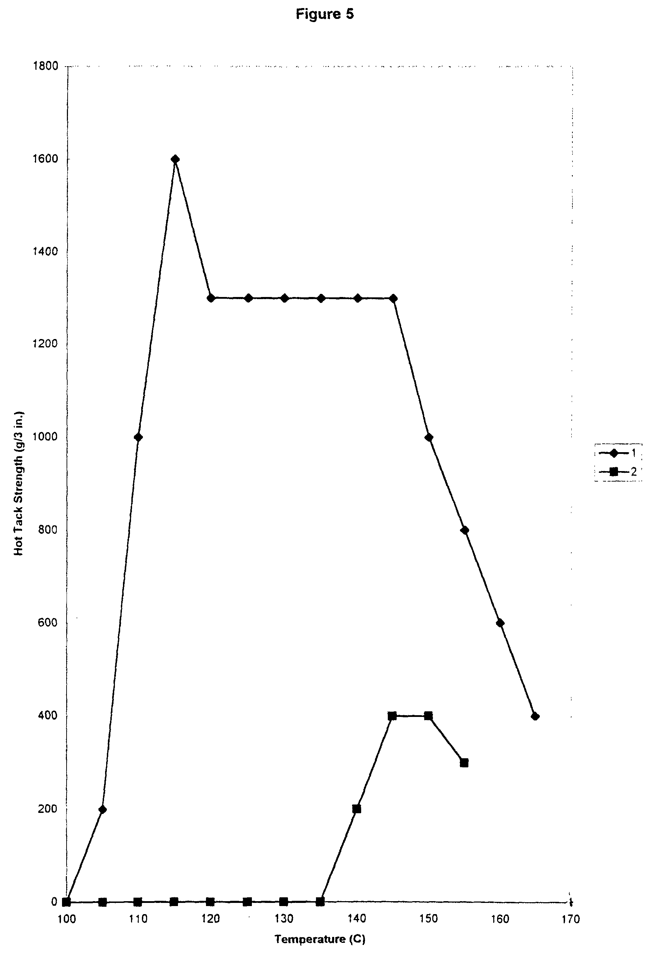

The hot tack strength of a 2 layer blown film coextrusion is measured on both sides of the 76 µm film as shown in Figure 5. One side of the film was Exact™ 3132 metallocene plastomer. The other side was Sclair™ 11L4B linear low density ethylene-octene copolymer resin. The hot tack strength of the film, measured on the metallocene polymer side (curve #1), is surprisingly high over a very broad temperature range whereas the hot tack strength curve #2 measured on the linear low polyethylene side is neither high nor broad. The layer thickness in the coextruded film were approximately:
15 µm of Exact™ 3132 and 61 µm of SCLAIR™ 11L4B;
Exact™ 3132 - single-site catalyst ethylene/hexene copolymer with a density of 0.901 g/cc and a melt index of 1.2; and
Sclair™ 11 L4B - multi site catalyst ethylene/octene copolymer with a density of 0.919 g/cc and a melt index of 0.75.

### Example 6

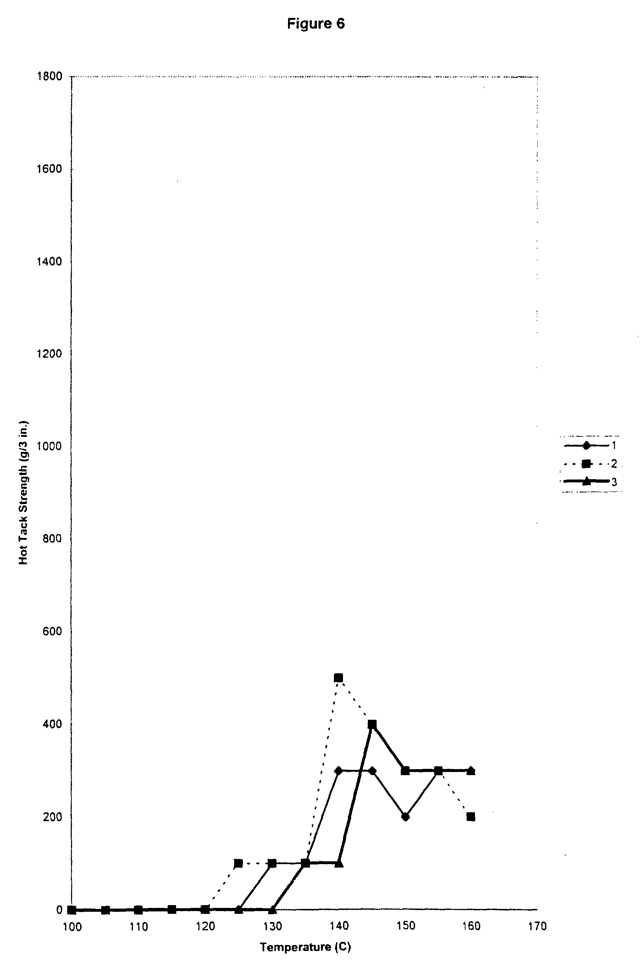

The hot tack strength of two blown film coextrusions made with Attane™ 4201 0.912 g/cc outer layers and core layers of Dowlex™ XSS84652.38 low (curve #1) and Sclair™ D332-05 medium density polyethylene (curve #2) were compared with monolayer Attane™ 4201 film (curve #3) in Figure 6. The films were all 76 µm thick. Attane™ 4201 is a linear very low density ethylene-octene copolymer resin made with a conventional rather than a metallocene catalyst. The coextruded films are not ones of the invention and no surprising increases hot tack strength are observed. The coextrusions had layer thickness of approximately 19/38/19 µm.
Attane™ 4201 - multi site catalyst ethylene/octene copolymer with a density of 0.912 g/cc and a melt index of 1.0.
Dowlex™ XSS84652.38 - multi site catalyst ethylene/octene copolymer with a density of 0.920 g/cc and a melt index of 0.85.
Sclair™ D332-05 - multi site catalyst ethylene/octene copolymer with a density of 0.930 g/cc and a melt index of 1.0.

### Example 7

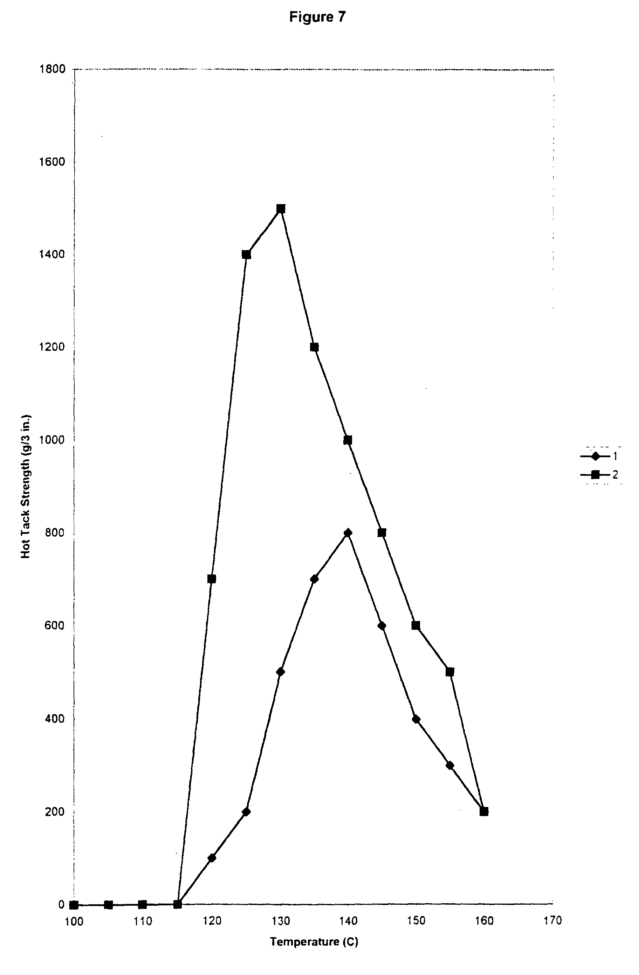

The hot tack strength of an 100 µm thick blown film coextrusion with Affinity™ PL1880 outer layers and a core layer of Soarnol™ ET 3803 EVOH was compared with the hot tack strength of a 76 µm Affinity™ PL1880 monofilm. As can be seen in Figure 7, the inherent hot tack strength of the Affinity™ PL1880 (curve #1) has been at least doubled by the addition of the higher density core layer (curve #2). In the EVOH coextrusion, layers of Bynel™ 4109 coextrudable adhesive resin were included on either side of the EVOH layer to bond it properly to the Affinity™ plastomer outer layers. The thickness of each of the layers in the coextruded film were 41/4/10/5/41 µm, respectively. The hot tack boosting layer can be thought of as including both the Bynel™ 4109 layers and the Soarnol™ ET 3803 core layer.
Affinity ™ PL1880 - single-site ethylene/octene copolymer with a density of 0.902 g/cc and a melt index of 1.0.
Soarnol™ ET 3803 - ethylene/vinyl alcohol copolymer with an ethylene content of 38 mole per cent, a density of 1.17 g/cc and a melt index of 3.3 g/10 minutes measured at 210°C/2.16 kg.
Bynel™ 4109 - anhydride & rubber modified linear low density polyethylene adhesive polymer with a density of 0.928 g/cc and a melt index of 3.2.

### Example 8

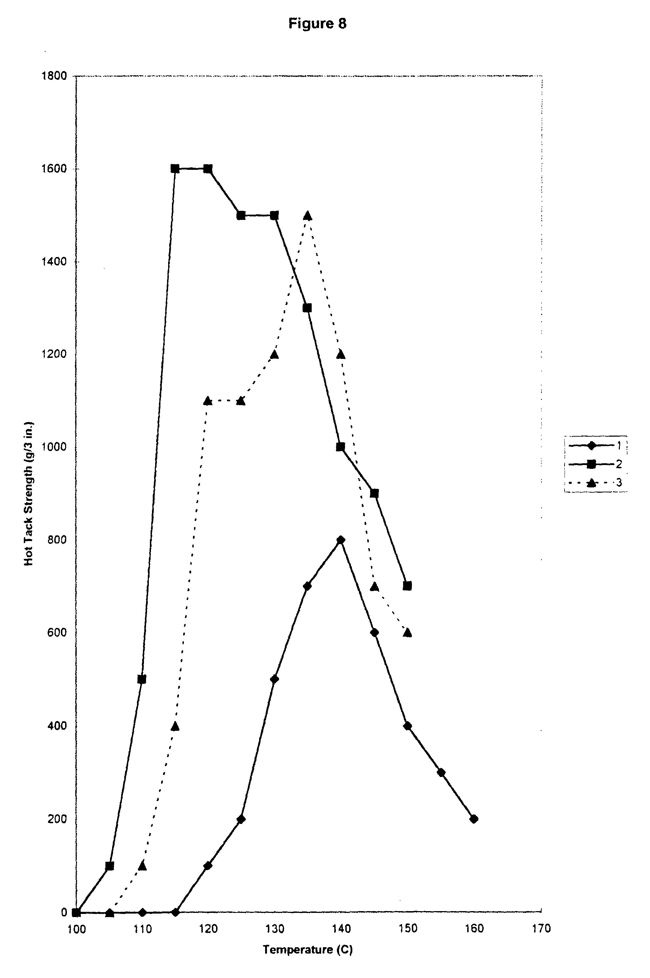

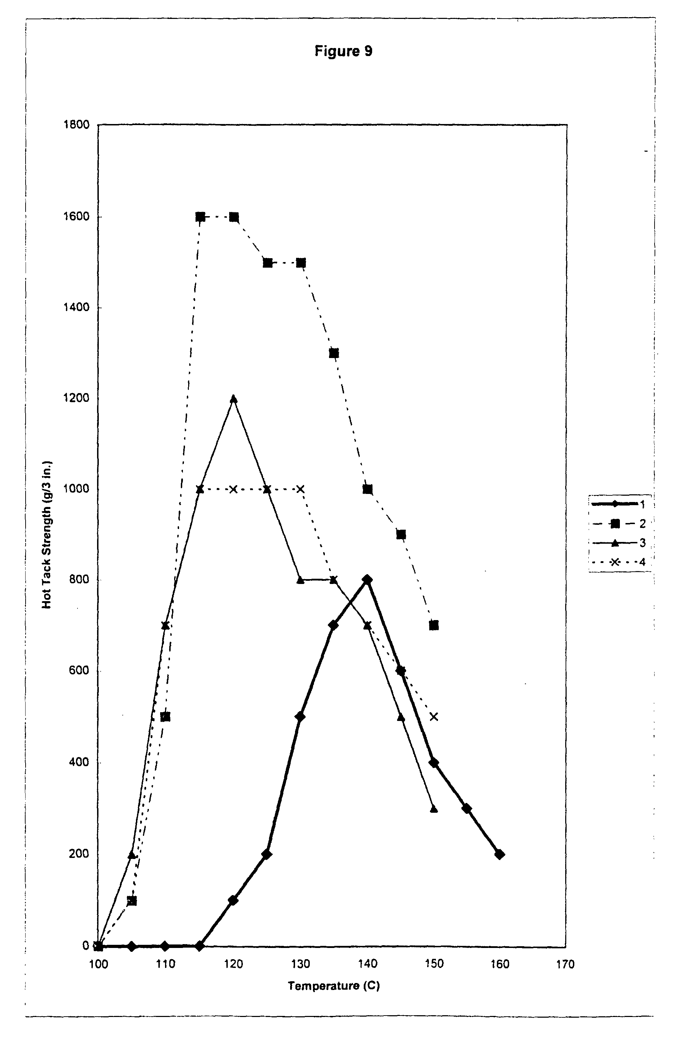

The hot tack strength of two 76 µm thick blown film coextrusions with different density metallocene plastomer outer layers was compared with the hot tack strength of a 76 µm Affinity ™ PL1880 monofilm. In curve #2 of Figure 8, the metallocene plastomer resin used to form the outer layers was Affinity ™ PL1880 (0.902 g/cc density), whereas the outer layers were made from Affinity™ PL1840 (0.908 g/cc density) in curve #3. The coextrusions had layers of thickness of approximately 13/50/13 µm, respectively. The film made with Affinity™ PL1880 outer layers had a core layer made from Sclair™ D332-05 medium density polyethylene. The film made with Affinity™ PL1840 outer layers had a core layer made from Sclair™ E431-06 medium density polyethylene. As can be seen, the hot tack strength curves for the coextruded films are both much broader and higher than the curve for the monofilm (curve #1).
Affinity ™ PL1880 - single-site catalyst ethylene/octene copolymer with a density of 0.902 g/cc and a melt index of 1.0.
Affinity™ PL1840 - single-site catalyst ethylene/octene copolymer with a density of 0.908 g/cc and a melt index of 1.0.
Sclair™ D332-05 - multi site catalyst ethylene/octene copolymer with a density of 0.930 g/cc and a melt index of 1.0.
Sclair™ E431-06 - multi site catalyst ethylene/octene copolymer with a density of 0.935 g/cc and a melt index of 1.0.

### Example 9

The hot tack boosting effect depends on the density difference between the single-site catalyst polymer sealant layer and the backing layer. Figure 9 compares the hot tack strength of three blown film coextrusions with that of Affinity™ PL1880 monofilm (curve #1). The coextrusions all have outer layers made from Affinity™ PL1880 resin which has a density of 0.902 g/cc. The core layer in curve #2 has a density of 0.930 g/cc whereas the core layer densities for curves #3 and #4 are 0.912 and 0.908 g/cc respectively. All films were 76 µm thick. The coextrusions had layers of thickness of approximately 13/50/13 µm, respectively. The hot tack boost provided by the medium density core layer was the most dramatic, but a performance improvement is still evident even when the density difference between outer and core layer is as small as 0.006 g/cc.
Affinity ™ PL1880 - single-site catalyst ethylene/octene copolymer with a density of 0.902 g/cc and a melt index of 1.0.
Sclair™ D332-05 - multi site catalyst ethylene/octene copolymer with a density of 0.930 g/cc and a melt index of 1.0.
Attane™ 4201 - multi site catalyst ethylene/octene copolymer with a density of 0.912 g/cc and a melt index of 1.0.
Affinity™ PL1840 - single-site catalyst ethylene/octene copolymer with a density of 0.908 g/cc and a melt index of 1.0.

## Claims

1. A film having at least two layers for use as a sealant component in a multi-layer film or as a sealant film in a multi-layer structure comprising a surface sealing layer and a hot tack strength boosting layer, the surface sealing layer being selected from single-site catalyst (SSC) interpolymers of ethylene and one or more C₃ - C₂₀ α-olefins having a density in the range of about 0.87 to about 0.930 gm/cc and a melt index of from about 0.2 to about 10 dg/minute; and the hot tack strength boosting layer substantially increasing the hot tack strength of the surface sealing layer and being selected from single-site and non-single-site catalyst copolymers, homopolymers and terpolymers of ethylene and blends thereof, having a density of from at least about 0.900 gm/cc and a melt index of from about 0.2 to about 20 dg/minute; wherein the density of the boosting layer is higher than the density of the single site catalyst resin layer by a value of from 0.003 gm/cc to 0.35 gm/cc.

2. A film as claimed in Claim 1 wherein the SSC layer has a film thickness of from about 0.5 mil to about 3.0 mil; the hot tack strength boosting layer has a film thickness of from about 0.5 mil to about 6.0 mil; and the ratio of the film thickness of the SSC layer to the boosting layer ranges from about 0.08 to about 6.

3. A film as claimed in Claim 1 wherein the SSC layer has a melting point of from about 60°C to about 120°C; and the hot tack strength boosting layer has a melting point of from about 70°C to about 130°C; and the difference in the melting points between the SSC layer and the boosting layer is at least about 10°C, with the melting point of the boosting layer being higher.

4. A film as claimed in Claim 1 wherein the SSC interpolymers comprise ethylene and C₄-C₈ α-olefins and blends thereof with other ethylene polymers, and the density ranges from about 0.88 gm/cc to about 0.920 gm/cc and the melt index is from 0.5 to 2.0 dg/minute; and the boosting layer is selected from single-site catalyst and non-single-site catalyst copolymers, homopolymers and terpolymers of ethylene and blends thereof selected from interpolymers of ethylene and one or more C₃-C₂₀ α-olefins; ethylene homopolymers made by high pressure processes; ethylene vinyl acetate polymers; acid copolymers; co-extrudable ethylene copolymer adhesives; and blends of such polymers, and the density ranges from about 0.900 gm/cc to about 0.960 gm/cc and the melt index is from about 0.5 to about 2.0 dg/minute; and the difference in densities between the layers is at least about 0.005 to about 0.06.

5. A film as claimed in Claim 4 wherein the difference in densities between the layers is from about 0.015 to about 0.03 gm/cc.

6. A pouch for containing a flowable material, said pouch comprising a sealant film as claimed in any of Claims 1 to 5, which pouch is in tubular form and his transversely heat sealed ends.

7. A method of enhancing the sealing properties of a single-site catalyst (SSC) resin layer for use as a sealing layer in a packaging film structure wherein the SSC resin layer is adjacent another polymer layer of higher density, and the density difference between the layers is from about 0.003 gm/cc to about 0.35 gm/cc.

8. A method of enhancing the sealing properties of a single-site catalyst (SSC) resin layer for use as a sealing layer in a packaging film structure wherein the SSC resin layer is adjacent another polymer layer of higher density, wherein the SSC resin layer and the polymer layer of higher density are as defined in Claim 1.

9. A method of enhancing the sealing properties of a single-site catalyst (SSC) resin layer for use as a sealing layer in a packaging film structure wherein the SSC resin layer is adjacent another polymer layer of higher density, wherein the SSC resin layer and the polymer layer of higher density are as defined in Claim 4.

10. A process for making pouches filled with a flowable material, using a vertical form, fill and seal apparatus, in which process each pouch is made from a flat web of film by forming a tubular film therefrom with a longitudinal seal and subsequently flattening the tubular film at a first position and transversely heat sealing said tubular film at the flattened position, filling the tubular film with a predetermined quantity of flowable material above said first position, flattening the tubular film above the predetermined quantity of flowable material at a second position and transversely heat sealing said tubular film at the second position, the improvement comprising making the pouches from a flat web of film comprising a film as claimed in Claim 1.

## Patentansprüche

1. Folie mit mindestens zwei Schichten zur Verwendung als Abdichtungskomponente in einer mehrschichtigen Folie oder als Abdichtungsfolie in einer mehrschichtigen Struktur, die eine Oberflächenabdichtungsschicht und eine Heißklebefestigkeitsverstärkungsschicht aufweist, wobei die Oberflächenabdichtungsschicht unter Einzentrenkatalysator-(SSC-)-Interpolymeren von Ethylen und einem oder mehreren C₃-C₂₀-α-Olefinen mit einer Dichte im Bereich von etwa 0,87 bis etwa 0,930 g/cm³ und einem Schmelzindex von etwa 0,2 bis etwa 10 dg/min ausgewählt ist; und wobei die Heißklebefestigkeitsverstärkungsschicht die Heißklebefestigkeit der Oberflächenabdichtungsschicht wesentlich verstärkt und unter Einzentren- und Nicht-Einzentrenkatalysator-Copolymeren, Homopolymeren und Terpolymeren von Ethylen und deren Gemischen ausgewählt ist, eine Dichte von mindestens etwa 0,900 g/cm³ und einen Schmelzindex von etwa 0,2 bis etwa 20 dg/min aufweist; wobei die Dichte der Verstärkungsschicht um einen Wert von 0,003 g/cm³ bis 0,35 g/cm³ höher ist als die Dichte der Einzentrenkatalysator-Harzschicht.

2. Folie nach Anspruch 1, wobei die SSC-Schicht eine Schichtdicke von etwa 0,5 Mil bis etwa 3,0 Mil aufweist; wobei die Heißklebefestigkeitsverstärkungsschicht eine Schichtdicke von etwa 0,5 Mil bis etwa 6,0 Mil aufweist; und wobei das Schichtdickenverhältnis der SSC-Schicht zur Verstärkungsschicht etwa 0,08 bis etwa 6 beträgt.

3. Folie nach Anspruch 1, wobei die SSC-Schicht einen Schmelzpunkt von etwa 60°C bis etwa 120°C aufweist und die Heißklebefestigkeitsverstärkungsschicht einen Schmelzpunkt von etwa 70°C bis etwa 130°C aufweist; und wobei die Differenz zwischen den Schmelzpunkten der SSC-Schicht und der Verstärkungsschicht mindestens etwa 10°C beträgt, wobei der Schmelzpunkt der Verstärkungsschicht höher ist.

4. Folie nach Anspruch 1, wobei die SSC-Interpolymere Ethylen und C₄-C₈-α-Olefine und deren Gemische mit anderen Ethylenpolymeren aufweisen, die Dichte etwa 0,88 g/cm³ bis etwa 0,920 g/cm³ beträgt und der Schmelzindex 0,5 bis 2,0 dg/min beträgt; und wobei die Verstärkungsschicht unter Einzentren- und Nicht-Einzentrenkatalysator-Copolymeren, Homopolymeren und Terpolymeren von Ethylen und Gemischen daraus ausgewählt ist, ausgewählt unter Interpolymeren von Ethylen und einem oder mehreren C₃-C₂₀-α-Olefinen; durch Hochdruckverfahren hergestellten Ethylen-Homopolymeren; Ethylen-Vinylacetat-Polymeren; Säure-Copolymeren; gemeinsam extrudierbaren Ethylencopolymer-Klebstoffen und Gemischen aus derartigen Polymeren, wobei die Dichte etwa 0,900 g/cm³ bis etwa 0,960 g/cm³ beträgt und der Schmelzindex etwa 0,5 bis etwa 2,0 dg/min beträgt; und wobei die Dichtedifferenz zwischen den Schichten mindestens etwa 0,005 bis etwa 0,06 beträgt.

5. Folie nach Anspruch 4, wobei die Dichtedifferenz zwischen den Schichten etwa 0,015 bis etwa 0,03 g/cm³ beträgt.

6. Beutel zur Aufnahme von fließfähigem Material, wobei der Beutel eine Dichtungsmaterialfolie nach einem der Ansprüche 1 bis 5 aufweist, wobei der Beutel schlauchförmig ist und in Querrichtung heißverschweißte Enden aufweist.

7. Verfahren zur Verbesserung der Dichtungseigenschaften einer Einzentrenkatalysator-(SSC-)Harzschicht zur Verwendung als Abdichtungsschicht in einer Verpackungsfolienstruktur, wobei die SSC-Harzschicht an eine weitere Polymerschicht von höherer Dichte angrenzt, und wobei die Dichtedifferenz zwischen den Schichten etwa 0,003 g/cm³ bis etwa 0,35 g/cm³ beträgt.

8. Verfahren zur Verbesserung der Dichtungseigenschaften einer Einzentrenkatalysator-(SSC-)Harzschicht zur Verwendung als Abdichtungsschicht in einer Verpackungsfolienstruktur, wobei die SSC-Harzschicht an eine weitere Polymerschicht von höherer Dichte angrenzt, wobei die SSC-Harzschicht und die Polymerschicht von höherer Dichte der Definition in Anspruch 1 entsprechen.

9. Verfahren zur Verbesserung der Dichtungseigenschaften einer Einzentrenkatalysator-(SSC-)Harzschicht zur Verwendung als Abdichtungsschicht in einer Verpackungsfolienstruktur, wobei die SSC-Harzschicht an eine weitere Polymerschicht von höherer Dichte angrenzt, wobei die SSC-Harzschicht und die Polymerschicht von höherer Dichte der Definition in Anspruch 4 entsprechen.

10. Verfahren zur Herstellung von Beuteln, die mit einem fließfähigen Material gefüllt sind, unter Verwendung einer Form-, Füll- und Verschließvorrichtung, wobei nach dem Verfahren jeder Beutel aus einer flachen Folienbahn hergestellt wird, indem daraus eine Schlauchfolie mit Längsschweißnaht geformt und die Schlauchfolie anschließend an einer ersten Stelle flachgedrückt und an der flachgedrückten Stelle in Querrichtung heißverschweißt wird, die Schlauchfolie oberhalb der ersten Stelle mit einer vorgegebenen Menge des fließfähigen Materials gefüllt wird, die Schlauchfolie oberhalb der vorgegebenen Menge des fließfähigen Materials an einer zweiten Stelle flachgedrückt und an der zweiten Stelle in Querrichtung heißverschweißt wird; wobei die Verbesserung die Herstellung von Beuteln aus einer flachen Folienbahn mit einer Folie nach Anspruch 1 aufweist.

## Revendications

1. Film possédant au moins deux couches pour une utilisation en tant que composant de scellage dans un film multicouche ou en tant que film de scellage dans une structure multicouche comprenant une couche superficielle de scellage et une couche d'amplification de la résistance à un collage à chaud, la couche superficielle de scellage étant choisie parmi des interpolymères catalysés par un catalyseur à site unique (SSC) d'éthylène et d'une ou de plusieurs α-oléfines C₃-C₂₀ présentant une densité dans l'intervalle d'environ 0,87 à environ 0,930 g/cc et un indice de fluidité d'environ 0,2 à environ 10 dg/minute; et la couche d'amplification de la résistance à un collage à chaud augmentant substantiellement la résistance à un collage à chaud de la couche superficielle de scellage et étant choisie parmi des copolymères, des homopolymères et des terpolymères d'éthylène catalysés par un catalyseur à site unique ou à un site non unique et des mélanges de ceux-ci, présentant une densité d'au moins environ 0,900 g/cc et un indice de fluidité d'environ 0,2 à environ 20 dg/minute; dans lequel la densité de la couche d'amplification est supérieure à la densité de la couche de résine catalysée par un catalyseur à site unique d'une valeur de 0,003 g/cc à 0,35 g/cc.

2. Film suivant la revendication 1, dans lequel la couche SSC possède une épaisseur de film d'environ 0,5 mil à environ 3,0 mils; la couche d'amplification de la résistance à un collage à chaud possède une épaisseur de film d'environ 0,5 mil à environ 6,0 mils; et le rapport de l'épaisseur de film de la couche SSC sur celle de la couche d'amplification varie d'environ 0,08 à environ 6.

3. Film suivant la revendication 1, dans lequel la couche SSC possède un point de fusion d'environ 60°C à environ 120°C; et la couche d'amplification de la résistance à un collage à chaud possède un point de fusion d'environ 70°C à environ 130°C; et la différence des points de fusion entre la couche SSC et la couche d'amplification est d'au moins environ 10°C, le point de fusion de la couche d'amplification étant supérieur.

4. Film suivant la revendication 1, dans lequel les interpolymères SSC comprennent de l'éthylène et des α-oléfines C₄-C₈ et des mélanges de ceux-ci avec d'autres polymères d'éthylène et la densité varie d'environ 0,88 g/cc à environ 0,920 g/cc et l'indice de fluidité est de 0,5 à 2,0 dg/minute; et la couche d'amplification est choisie parmi des copolymères, des homopolymères et des terpolymères d'éthylène catalysés par un catalyseur à site unique et par un catalyseur à site non unique et des mélanges de ceux-ci choisis parmi des interpolymères d'éthylène et d'une ou de plusieurs α-oléfines C₃-C₂₀; des homopolymères d'éthylène fabriqués par des procédés haute pression; des polymères d'éthylène et d'acétate de vinyle; des copolymères acides; des adhésifs à base de copolymères d'éthylène pouvant être co-extrudés; et des mélanges de tels polymères, et la densité varie d'environ 0,900 g/cc à environ 0,960 g/cc et l'indice de fluidité est d'environ 0,5 à environ 2,0 dg/minute; et la différence de densités entre les couches est d'au moins environ 0,005 à environ 0,06.

5. Film suivant la revendication 4, dans lequel la différence de densités entre les couches est d'environ 0,015 à environ 0,03 g/cc.

6. Sachet destiné à contenir une matière apte à l'écoulement, ledit sachet comprenant un film de scellage suivant l'une quelconque des revendications 1 à 5, lequel sachet se trouve sous une forme tubulaire et ses extrémités sont thermoscellées transversalement.

7. Procédé pour l'amélioration des propriétés de scellage d'une couche de résine catalysée par un catalyseur à site unique (SSC) destinée à être utilisée en tant que couche de scellage dans une structure de film d'emballage, dans lequel la couche de résine SSC est adjacente à une autre couche de polymère avec une densité supérieure et la différence de densités entre les couches est d'environ 0,003 g/cc à environ 0,35 g/cc.

8. Procédé pour l'amélioration des propriétés de scellage d'une couche de résine catalysée par un catalyseur à site unique (SSC) destinée à être utilisée en tant que couche de scellage dans une structure de film d'emballage, dans lequel la couche de résine SSC est adjacente à une autre couche de polymère avec une densité supérieure, dans lequel la couche de résine SSC et la couche de polymère avec une densité supérieure sont comme il est défini dans la revendication 1.

9. Procédé pour l'amélioration des propriétés de scellage d'une couche de résine catalysée par un catalyseur à site unique (SSC) destinée à être utilisée en tant que couche de scellage dans une structure de film d'emballage, dans lequel la couche de résine SSC est adjacente à une autre couche de polymère avec une densité supérieure, dans lequel la couche de résine SSC et la couche de polymère avec une densité supérieure sont comme il est défini dans la revendication 4.

10. Procédé pour fabriquer des sachets remplis avec une matière apte à l'écoulement, en utilisant un appareil de formage, de remplissage et de scellage vertical, dans lequel procédé chaque sachet est fabriqué à partir d'une bande plate de film en formant un film tubulaire à partir de celle-ci avec un scellement longitudinal et en aplatissant par la suite le film tubulaire au niveau d'une première position et en thermoscellant transversalement ledit film tubulaire au niveau de la position aplatie, en remplissant le film tubulaire avec une quantité prédéterminée de matière apte à l'écoulement au-dessus de ladite première position, en aplatissant le film tubulaire au-dessus de la quantité prédéterminée de matière apte à l'écoulement au niveau d'une deuxième position et en thermoscellant transversalement ledit film tubulaire au niveau de la deuxième position, l'amélioration comprenant la fabrication de sachets à partir d'une bande plate de film comprenant un film suivant la revendication 1.
